(19) Europäisches Patentamt
European Patent Office
Office européen des brevets

(11) **EP 2 037 387 A1**

(12) **EUROPEAN PATENT APPLICATION**

(43) Date of publication:
**18.03.2009 Bulletin 2009/12**

(51) Int Cl.:
***G06F 21/20*** (2006.01)

(21) Application number: **08252904.1**

(22) Date of filing: **01.09.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS** | (72) Inventors:<br>• **Hirata, Shinji**<br>  **Chiyoda-ku**<br>  **Tokyo 100-8220 (JP)**<br>• **Takahashi, Kenta**<br>  **Chiyoda-ku**<br>  **Tokyo 100-8220 (JP)** |
| (30) Priority: **06.09.2007 JP 2007230899** | (74) Representative: **Calderbank, Thomas Roger et al**<br>**Mewburn Ellis LLP**<br>**33 Gutter Lane**<br>**London**<br>**EC2V 8AS (GB)** |
| (71) Applicant: **Hitachi Ltd.**<br>**Chiyoda-ku**<br>**Tokyo (JP)** | |

(54) **Authentication server, client terminal for authentication, biometrics authentication system, biometrics authentication method, and program for biometrics authentication**

(57)     A template sharing processing is performed between a first authentication server 100 and a second authentication server 110. A client terminal 120 generates two parameter differences, one of which is sent to the first authentication server 100, and the other to the second authentication server 110. The first authentication server 110 transforms an already-registered template with the received parameter difference to create a temporary template and sends the temporary template to the second authentication server 110. The second authentication server 110 transforms the received temporary template with the already-received parameter difference to create and register therein a further transformed template. A storage medium stores therein only a single master key for generating a parameter.

FIG. 7

**Description**

The present invention relates to a technology of authenticating an individual using a biometric feature every human has.

A user authentication system based on biometric information obtains biometric information of a user in a registration processing, extracts information referred to as a feature from the biometric information, and registers the extracted feature therein. The registered feature is called a template. In an authentication processing, the system obtains the biometric information from the user again, extracts the user's feature, and compares the newly-obtained feature against the already-registered template to thereby verify identity of the user. If a server authenticates a user based on biometric information of the user who is connected to the server via a network and is on a client side, the server typically holds a template. In the authentication processing, a client terminal obtains biometric information of the user, extracts the use's feature, and transmits the feature to the server. The server compares the received feature with the already-registered template to thereby verify identity of the user.

A template is information by which an individual can be identified. This means that the template needs to be strictly managed as personal information and thereby requires a high management cost. Even if the template is managed with strict security, many people are still psychologically reluctant to register a template because of concerns about leak of their personal information. Additionally, variations of one type of biometric information that one user has are limited. For example, a fingerprint authentication typically has only ten variations as a user has ten fingers in general. This means that, if the template is leaked and is put at risk of being forged, authentication based on the biometric information cannot be used any more, because such a template can not be easily changed to another, unlike authentication based on a password or an encryption key. Further, if biometric information of the same kind is registered in plural different systems, and is leaked from one of the systems, the other systems are likewise put at risk.

A method for solving the above described problems is to encrypt biometric information and then transmit the encrypted biometric information to an authentication server. However, the method requires decoding of the encrypted biometric information in the authentication processing. This still makes it difficult to block a leak of the template from a sophisticated attack or a leak intentionally made by a server administrator. The method fails to have a sufficient measure against personal information leak.

N.K.Ratha, J.H.Connell, R.M.Bolle, "Enhancing security and privacy in biometrics-based authentication systems", IBM Systems Journal, Vol.40, No.3, 2001, discloses a method in which: in a registration processing, a feature of biometric information is transformed by a given function and a secret parameter held by a client, and the transformed feature is stored in a server as a template of which original information is kept confidential; and, in an authentication processing, a feature of the biometric information is newly extracted by the client, the extracted feature is transformed with the same function and parameter as those used in the registration processing, the transformed feature is transmitted to the server, and the received feature is compared with the template both in transformed states by the server. This method is also called a cancelable biometric authentication. The server can authenticate the biometric information but cannot know its original feature, because the client holds the parameter in secret. This allows personal information of the user to be protected. Even if the template is leaked, the user's personal information can still be protected by creating and reregistering another template using a different transformation parameter.

If a cancelable biometric authentication system is configured by a plurality of servers each of which is provided by different service providers, a configuration of the system may be as follows. A single kind of biometric information and a single unit of sensor for obtaining the biometric information are used in the system so as to reduce cost of introducing a plurality of sensors. Biometric information is registered for each service provider, which prevents the biometric information from being known to each other. The registered biometric information is stored as a template in a server of each service provider. In the registration, parameters generated by a client are different for each service provider and are stored in a tamper resistant device (a storage medium) owned by a user. In authentication, a parameter corresponding to a desired service is read from the tamper resistant device to the client. The read parameter is used to send a transformed feature to a corresponding server, to thereby conduct authentication. Another method of realizing a cancelable biometric authentication system available to a plurality of servers is disclosed in James L. Cambier, Ulf M. Cahn von Seelen, Randal Glass, Russ ell Moore, Ian Scott, Michael Brai thwai te, John Daugman, "Application-Specific Biometric Templates", IEEE Workshop on Automated Identification Advanced Technologies, Tarrytown, NY, March, 2002, P167-171. In the method, a server dedicated to transforming a template creates a template for each authentication server.

However, in constructing the cancelable biometric authentication system available to a plurality of servers, the above configurations based on the "*Enhancing security and privacy in biometrics-based authentication systems*" or the "*Application-Specific Biometric Templates*" have problems as follows.

One problem is that registration of biometric information lays a large burden on both a user and a service provider in those systems. For example, every time a user wants to use a new service, the user needs to go to a contact point for registration of a service provider providing the desired service, because biometric information is registered for each service provider. The service provider, in turn, needs to operate and maintain the contact point for registration.

Further, the user needs to take a necessary procedure for registration, such as presenting an ID card, to verify identity of the user. The service provider also needs to install equipment for preventing fraudulent activity such as impersonation, for strictly verifying user's identity.

Another problem is that an available memory of a tamper resistant device should be large in those systems. Since different service providers have different parameters, the more service providers a user uses, the more parameters the tamper resistant device of the user stores. Thus an existing tamper resistant device may run short of memory.

The present invention has been made in an attempt to provide a cancelable biometric authentication system, in which a client terminal of a user is connected to a plurality of authentication servers, which can reduce a burden in registering biometric information and can eliminate a need of a larger memory of a storage medium, as described above.

In a cancelable biometric authentication system, a template sharing processing is performed. In the processing, of two authentication servers, one server completes registration of a template, and then transfers the template to the other that has not yet registered the template. Herein, the template is referred to as being shared between the two authentication servers. That is, the other authentication server which receives the template from one authentication server is no longer required to register the template. Thus a burden of registration is reduced. The template transferred from one authentication server to the other is called a temporary template and is different from the template that one authentication server has already stored therein. This prevents the template stored in one authentication server from being known to the other and ensures information security.

In the cancelable biometric authentication system, a client terminal generates a parameter from a single master key stored in a storage medium owned by a user and a random number managed by an authentication server. This allows the storage medium to store therein only the single master key.

IN THE DRAWINGS:

FIG. 1 is a block diagram showing configuration of a cancelable finger vein authentication system according to an embodiment of the present invention.
FIG. 2 is a block diagram showing functional configuration of a first authentication server 100.
FIG. 3 is a view showing data structure of a template database used when a template storage unit 105 stores therein a template.
FIG. 4 is a block diagram showing functional configuration of a client terminal 120.
FIG. 5 is a block diagram showing functional configuration of a tamper resistant device 140.
FIG. 6 is a flowchart showing a registration processing performed in the first authentication server 100.
FIG. 7 is a flowchart showing a template sharing processing in which a template is transferred from the first authentication server 100 to a second authentication server 110.
FIG. 8 is a flowchart showing an authentication processing performed in the first authentication server 100.
FIG. 9 is a flowchart showing a template update processing performed in the first authentication server 100.

With reference to attached drawings, the exemplary embodiment of the present invention is described in detail below.

Overview of the Embodiment

In a biometrics authentication system according to the embodiment is described assuming the following. To simplify description, two authentication servers, namely, a first authentication server and a second authentication server are provided for each service provider. A user inputs a finger vein image into a client terminal and presents his/her tamper resistant device (a storage medium). The authentication server verifies a finger vein while keeping a feature thereof secret.

In the embodiment, mainly described are four processings, namely, a (user) registration processing, a template sharing processing, an authentication processing, and a template update processing.

In the registration processing, following steps are executed. Herein, description is made assuming that a user registration is performed in the first authentication server. A user inputs his/her biometric information into a sensor connected to a client terminal. The client terminal extracts a feature of the inputted biometric information. The client terminal then generates a master key (key data capable of generating a parameter corresponding to each authentication server) and stores the master key in a tamper resistant device. The first authentication server generates a random number and sends the random number to the client terminal. The client terminal generates a parameter from the random number received from the first authentication server and the master key in the tamper resistant device. The client terminal transforms the feature with the parameter and sends the transformed feature to the first authentication server. The first authentication server registers both the received transformed feature (a transformed feature for comparison) and the random number as a template.

In the template sharing processing, following steps are executed. Herein, description is made assuming that the template is transferred from the first authentication server to a second authentication server (the other authentication server). The client terminal generates two parameter differences, namely, a first and a second parameter deference. The client terminal sends the first parameter difference (or a first difference parameter) to the first authentication server and sends the second parameter difference (or a second difference parameter) to the second authentication server. The first authentication server transforms the already-received template with the received first parameter difference to thereby create a temporary template. The first authentication server sends the temporary template to the second authentication server. The second authentication server transforms the received temporary template with the second parameter difference to thereby create another template. This allows the first authentication server to transfer the transformed template to the second authentication server with security while keeping the template managed by itself secret without outputting it outside. Template sharing herein means that one authentication server transfers a template managed by itself to another authentication server, which, in turn, creates its unique template managed by itself, using the received template.

In the authentication processing, following steps are executed. Herein, description is made assuming that an authentication is performed in the first authentication server. The user inputs biometric information into a sensor connected to the client terminal. The client terminal extracts a feature from the biometric information. The first authentication server sends the random number included in the already-registered template to the client terminal. The client terminal generates a parameter from the random number received from the first authentication server and the master key in the tamper resistant device. The client terminal transforms the feature with the parameter and sends the transformed feature to the first authentication server. The first authentication server compares the received transformed feature with the transformed feature included in the template to determine identity of the user.

In the template update processing, following steps are executed. Herein, description is made assuming that update of the template is performed in the first authentication server. The first authentication server generates a first random number and sends the first random number and a second random number included in the already-registered temperature to the client terminal. The client terminal generates a parameter difference from the first and second random numbers and sends the parameter difference to the first authentication server. The first authentication server transforms the template with the parameter difference to thereby create a new template, thus allowing the template to be updated.

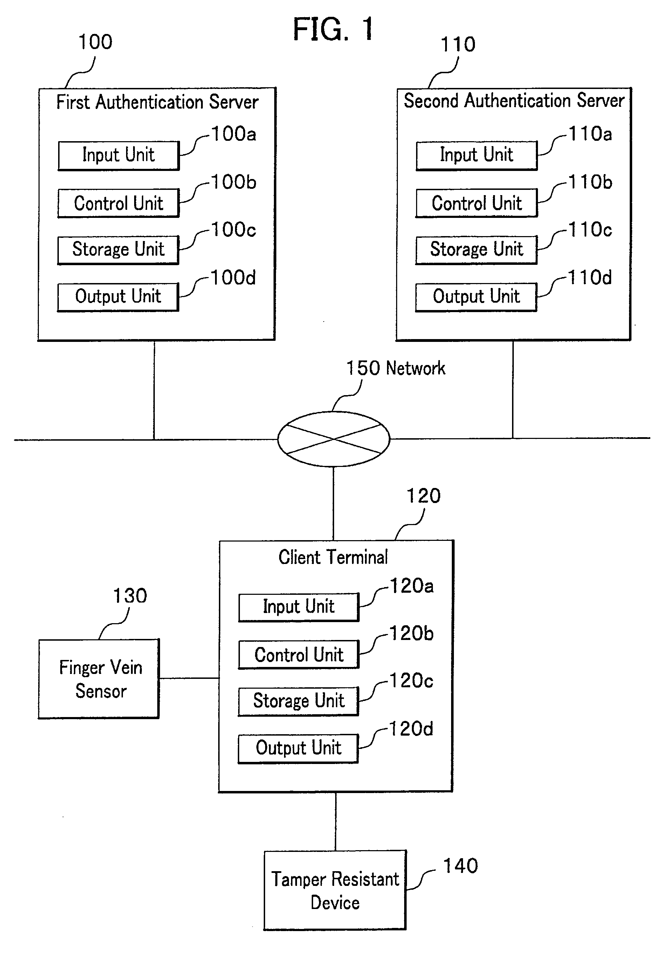

Next is described in detail configuration of a cancelable finger vein authentication system according to the embodiment with reference to FIG. 1.

Configuration of Cancelable Finger Vein Authentication System

The cancellable finger vein authentication system according to the embodiment includes a first authentication server 100, a second authentication server 110, a client terminal 120, a finger vein sensor 130, a tamper resistant device 140, and a network 150. The first authentication server 100, second authentication server 110, and client terminal 120 are each connected to the network 150. The client terminal 120 is also connected to the finger vein sensor 130 and tamper resistant device 140.

The first authentication server 100 stores templates of all users via a registration processing. In an authentication processing, the first authentication server 100 compares a transformed feature sent from the client terminal 120 with another transformed feature included in a template of a user of interest. In a template sharing processing, the first authentication server 100 receives a parameter difference from the client terminal 120, creates a temporary template therefrom, and sends the temporary template to the second authentication server 110. The second authentication server 110 having received the temporary template receives another parameter difference from the client terminal 120, creates another template therefrom, and registers the template. In a template update processing, the first authentication server 100 receives a parameter difference from the client terminal 120 and updates the template using the parameter difference.

The first authentication server 100 is embodied by a commonly used computer. Such a computer may include hardware resources, for example, an input unit 100a implemented with a keyboard or a mouse, a control unit 100b implemented with a CPU (Central Processing Unit), a storage unit 100c implemented with a RAM (Random Access Memory) for reserving a storage area for developing data to be read or written or with an HDD (Hard Disk Drive), and an output unit 100d implemented with a display or a printer. The control unit 100b reads out a program for executing processings such as the authentication processing, which will be described later, from a recording medium for an authentication server such as a ROM (Read Only Memory).

The first authentication server 100 is installed by a service provider for providing a user with a specific service and is usually preinstalled with an application executed for providing the service. However, it is optional that the first authentication server 100 is preinstalled with such an application, description of which is thus omitted from the embodiment.

The second authentication server 110 operates similarly to the first authentication server 100. So do the input unit 110a, control unit 110b, storage unit 110c, and output unit 110d included in the second authentication server 110, to the input unit 100a, control unit 100b, storage unit 100c, and output unit 100d included in the first authentication server 100, respectively.

In the registration processing, the client terminal 120 generates a master key and then generates a parameter from the master key and a random number obtained from the first authentication server 100. The client terminal 120 also obtains an image of finger veins of a user from the finger vein sensor 130, extracts a feature from the image, and transforms the feature with a parameter. The client terminal 120 sends the transformed feature to the first authentication server 100 and registers the transformed feature therein. The client terminal 120 writes the master key in the tamper resistant device 140. In the authentication processing, the client terminal 120 reads out the master key from the tamper resistant device 140 and generates a parameter therefrom. The client terminal 120 also obtains an image of finger veins of a user, extracts a feature from the image, and transforms the feature with the parameter. The client terminal 120 sends the transformed feature to the first authentication server 100, in which the two transformed features are compared with each other. In the template update processing, the client terminal 120 generates a parameter difference and sends the parameter difference to the first authentication server 100.

The client terminal 120 is embodied by a commonly used computer. Such a computer may include hardware resources, for example, an input unit 120a implemented with a keyboard or a mouse, a control unit 120b implemented with a CPU, a storage unit 120c implemented with a RAM for reserving a storage area for developing data to be read or written or with an HDD, and an output unit 120d implemented with a display or a printer. The control unit 120b reads out a program for executing processings such as a processing of extracting a feature from biological information of a user, which will be described later, from a recording medium for a client terminal such as a ROM.

The finger vein sensor 130 irradiates near-infrared light to a finger of a user and takes an image of veins of the finger which is obtained via the light transmitted through the finger. The taken finger vein image is sent to the client terminal 120.

The tamper resistant device 140 is a recording medium for storing a master key. The tamper resistant device 140 is embodied by, for example, an Smart card connectable to the client terminal 120 and having tamper resistance. In the registration processing, the tamper resistant device 140 receives the master key from the client terminal 120 and stores the master key therein. In the template sharing processing, authentication processing, and template update processing, the tamper resistant device 140 outputs the master key upon request of the client terminal 120.

Functional Configuration of Authentication Server

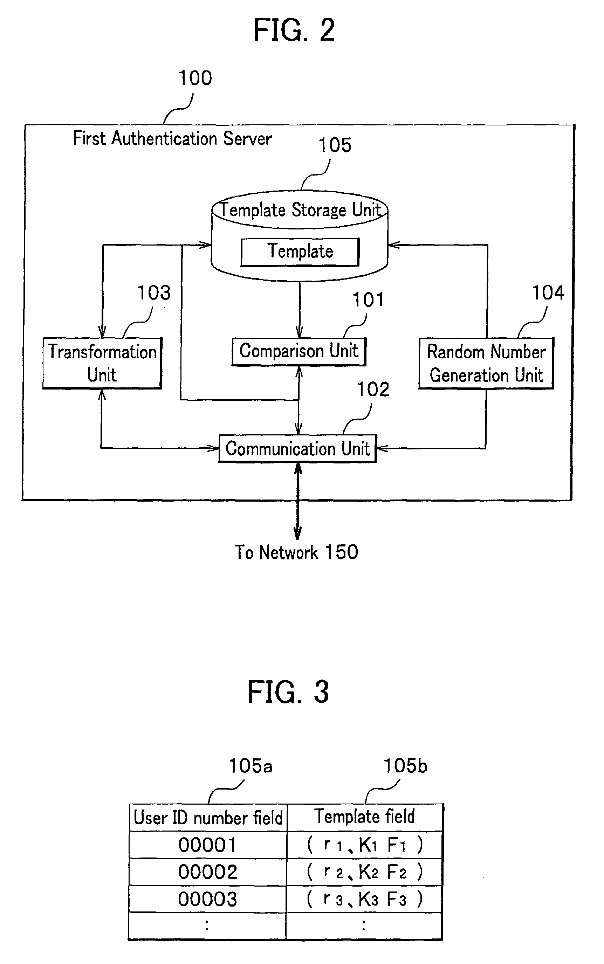

Next is described a functional configuration of the first authentication server 100 with reference to FIG. 2.

The first authentication server 100 includes a comparison unit 101, a communication unit 102, a transformation unit 103, a random number generation unit 104, and a template storage unit 105.

In the registration processing, the random number generation unit 104 generates a random number $r_1$. The communication unit 102 sends the generated random number $r_1$ to the client terminal 120 (see FIG. 1). The template storage unit 105 receives a transformed feature $K_1F$ (a value obtained by transforming a feature F with a parameter $K_1$) which is sent from the client terminal 120 via the communication unit 102. The template storage unit 105 creates a template ($r_1$, $K_1F$) from both the random number $r_1$ and the transformed feature $K_1F$ and stores the template therein. The term "template" used in the embodiment means registered information including a random number and a transformed feature generated by using the random number. The template storage unit 105 stores templates of all users. In the embodiment, the template storage unit 105 uses a template database for storing a template therein.

FIG. 3 shows data structure of the template database. The template database includes a user ID number field 105a and a template field 105b. In the user ID number field 105a, a user ID number is registered as information for identifying a user who has already completed a procedure for registration. In the template field 105b, a template corresponding to the user is registered. For example, if a user has his/her user ID number of "00001", a template of ($r_1$, $K_1F_1$) is assigned to the user, which enables management of the user. The template ($r_1$, $K_1F_1$) herein is registered information including the random number $r_1$ generated by the first authentication server 100, and the transformed feature $K_1F_1$ generated by transforming the feature $F_1$ of the user whose user ID number is 00001, with the parameter $K_1$ created by the client terminal 120.

In the authentication processing, the template storage unit 105 reads out the template ($r_1$, $K_1F$) using a user ID number of a user of the client terminal 120 who has requested to execute his/her authentication. The communication unit 102 sends the random number $r_1$ to the client terminal 120. The comparison unit 101 receives the transformed feature $K_1G$ from the client terminal 120 via the communication unit 102. The comparison unit 101 compares $K_1G$ with $K_1F$, to thereby determine the user's identity.

In the template sharing processing, the template storage unit 105 reads out the template ($r_1$, $K_1F$) to obtain the random number $r_1$. The random number generation unit 104 generates the random number $r'_1$. The communication unit

102 sends $r_1$ and r' to the client terminal 120. The transformation unit 103 receives a parameter difference (a first difference parameter) $\Delta K_1$ from the client terminal 120 via the communication unit 102. The transformation unit 103 then transforms $K_1F$ with the parameter difference $\Delta K_1$ to create a temporary template (r', K'F). The communication unit 102 sends the created temporary template (r', K'F) to the second authentication server 110.

In the template update processing, the random number generation unit 104 generates the random number $r_1$'. The template storage unit 105 reads out the template ($r_1$, $K_1F$) and sends $r_1$ and r' to the client terminal 120 via the communication unit 102. The transformation unit 103 receives the parameter difference $\Delta K_1$' from the client terminal 120 via the communication unit 102 and transforms $K_1F$ with the parameter difference $\Delta K_1$' to obtain $K_1$'F. The template storage unit 105 registers and stores therein a new updated template ($r_1$', $K_1$'F).

Functional configuration of the second authentication server 110 is similar to that of the first authentication server 100. Same names and same reference numbers are used for the components having the substantially same functions as those of the first authentication server. In the template sharing processing, the communication unit 102 of the second authentication server 110 receives the temporary template (r', K'F) from the first authentication server 100. The random number generation unit 104 generates a random number $r_2$. The communication unit 102 of the second authentication server 110 sends $r_2$ and r' to the client terminal 120. The transformation unit 103 thereof receives a parameter difference (or a second difference parameter) $\Delta K_2$ from the client terminal 120 and transforms K'F with the parameter difference $\Delta K_2$ to generate $K_2F$. The template storage unit 105 thereof registers a new template ($r_2$, $K_2F$).

Configuration of Client Terminal

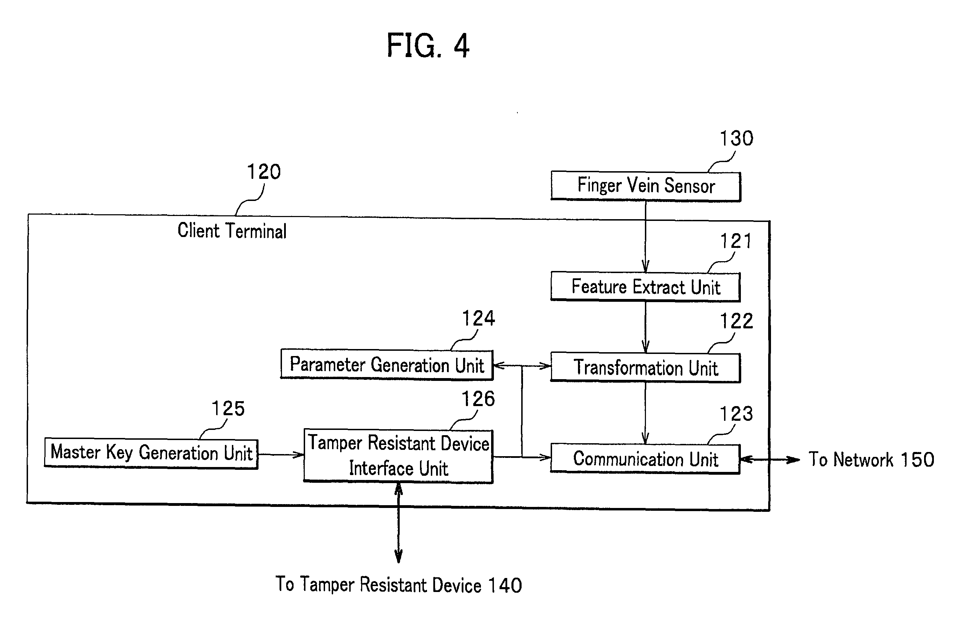

FIG. 4 shows functional configuration of the client terminal 120. The client terminal 120 includes a feature extract unit 121, a transformation unit 122, a communication unit 123, a parameter generation unit 124, a master key generation unit 125, and a tamper resistant device interface unit 126. The client terminal 120 is connected to the finger vein sensor 130.

In the registration processing in the first authentication server 100, the master key generation unit 125 generates a master key S. The communication unit 123 sends the random number $r_1$ from the first authentication server 100 to the parameter generation unit 124. The parameter generation unit 124 performs an operation with the random number $r_1$ and the master key S using a predetermined function to thereby generate the parameter $K_1$. The feature extract unit 121 extracts the feature F from a finger vein image of a user inputted from the finger vein sensor 130. The transformation unit 122 transforms the feature F with the parameter $K_1$, to thereby generate the transformed feature $K_1F$. The communication unit 123 sends the transformed feature $K_1F$ to the first authentication server 100. The tamper resistant device interface unit 126 stores the master key S in the tamper resistant device 140.

In the authentication processing in the first authentication server 100, the tamper resistant device interface unit 126 reads out the master key S from the tamper resistant device 140. The communication unit 123 sends the random number $r_1$ received from the first authentication server 100 to the parameter generation unit 124. The parameter generation unit 124 generates a parameter $K_1$ from the random number $r_1$ and the master key S. The feature extract unit 121 extracts a feature G from a finger vein image of a user inputted from the finger vein sensor 130. The transformation unit 122 transforms the feature G with the parameter $K_1$ to thereby generate a transformed feature $K_1G$. The communication unit 123 sends the transformed feature $K_1G$ to the first authentication server 100.

In the template sharing processing from the first authentication server 100 to the second authentication server 110, the communication unit 123 receives the random numbers $r_1$ and r' from the first authentication server 100 and sends the random numbers $r_1$ and r' to the parameter generation unit 124. The tamper resistant device interface unit 126 reads out the master key S from the tamper resistant device 140. The parameter generation unit 124 generates a parameter difference $\Delta K_1$ from the master key S and the random numbers $r_1$ and r', and sends the parameter difference $\Delta K_1$ to the first authentication server 100 via the communication unit 123. The communication unit 123 receives the random number $r_2$ and r' from the second authentication server 110. The tamper resistant device interface unit 126 reads out the master key S from the tamper resistant device 140. The parameter generation unit 124 generates a parameter difference $\Delta K_2$ from the master key S and the random numbers $r_2$ and r' and sends the parameter difference $\Delta K_2$ to the second authentication server 110 via the communication unit 123.

In the template update processing in the first authentication server 100, the communication unit 123 receives the random numbers $r_1$ and $r_1$' from the first authentication server. The tamper resistant device interface unit 126 reads out the master key S from the tamper resistant device 140. The parameter generation unit 124 generates a parameter difference $\Delta K_1$' from the master key S and the random numbers $r_1$ and $r_1$' and sends the parameter difference $\Delta K_1$' to the first authentication server 100 via the communication unit 123.

Configuration of Tamper Resistant Device

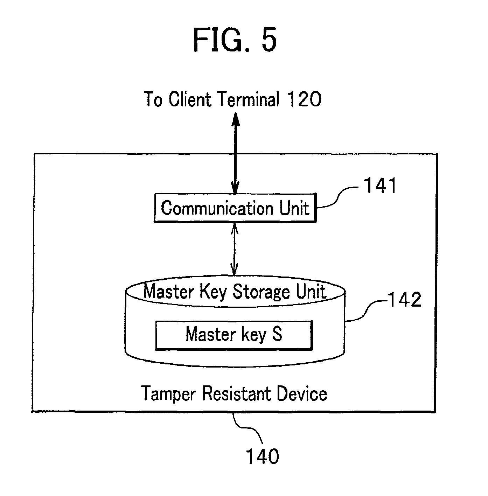

FIG. 5 shows functional configuration of the tamper resistant device 140.

The tamper resistant device 140 includes a communication unit 141 and a master key storage unit 142.

In the registration processing, the communication unit 141 receives the master key S from the client terminal 120. The master key storage unit 142 stores the master key S therein.

In the authentication processing, template sharing processing, and template update processing, the communication unit 141 outputs the master key S to the client terminal 120 in response to a request therefrom.

Processings in Cancelable Finger Vein Authentication System

Next are described processings performed in the cancelable finger vein authentication system. The processings include the registration processing, template sharing processing, authentication processing, and template update processing.

Registration Processing

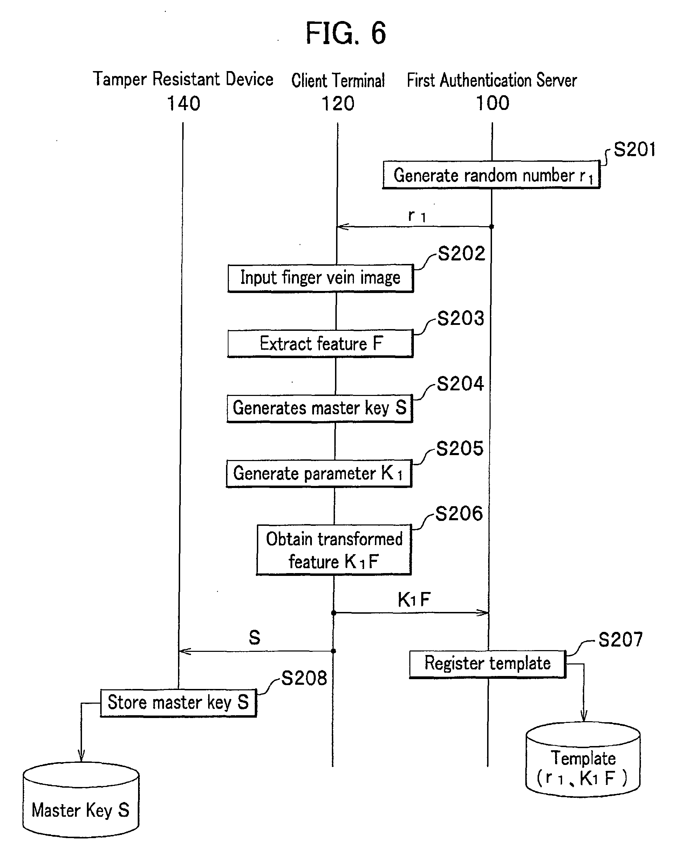

FIG. 6 is a flowchart of the registration processing in the first authentication server 100 in the present embodiment. Before the registration processing is executed, procedures necessary for registration of a user are completed such as a user's presentation of his/her ID card.

In step S201, the first authentication server 100 generates a random number $r_1$ and sends the random number $r_1$ to the client terminal 120.

In step S202, the client terminal 120 acquires a finger vein image of a user via the finger vein sensor 130.

In step S203, the client terminal 120 extracts a feature F which can identify the user from the acquired finger vein image. In the embodiment, the feature F is extracted by, for example, a method described in Naoto Miura, Akio Nagasaka, and Takafumi Miyatake, "Feature extraction of finger-vein patterns based on repeated line tracking and it's application to personal identification", Machine Vision and Applications, Vol.15, pp.194-203, 2004, detailed description of which is omitted herefrom.

In step S204, the client terminal 120 generates a master key S. In the embodiment, a master key is generated by a commonly used method of generating a random number. However, the method of generating the master key S is not limited to this.

In step S205, the client terminal 120 generates a parameter $K_1$ from the random number $r_1$ and the master key S received from the first authentication server 100. In the embodiment, the parameter $K_1$ is generated by obtaining a hash value of a bit-connected random number $r_1$ and master key S using some cryptographic hash function. However, the method of generating the parameter $K_1$ is not limited to this.

In step S206, the client terminal 120 transforms the feature F with the parameter $K_1$. In the embodiment, the feature F is transformed by, for example, a method described in Shinji Hirata, Kenta Takahashi, and Masahiro Mimura "A Proposition of Cancelable Biometrics Applicable to Biometric Authentication based on Image Matching", 2006-CSEC-34, pp.45-440, 2006, detailed description of which is omitted herefrom. The client terminal 120 sends the feature after the transformation (or transformed feature) $K_1F$ to the first authentication server 100. The client terminal 120 also sends the master key S to the tamper resistant device 140.

In step S207, the first authentication server 100 creates a template $(r_1, K_1F)$ with both the random number $r_1$ and the transformed feature $K_1F$ and registers the template in the template storage unit 105. At the registration, a user ID number of the user who has completed necessary registration procedures is determined. The user ID number is data inputted from the input unit 120a of the client terminal 120 and is used as a retrieval key through the template database (see FIG. 3). In the template database, a user ID number or a user who has completed necessary registration procedures are stored into the user ID number field 105a. A template of the user is stored into the template field 105b.

In step S208, the tamper resistant device 140 stores therein the master key S received from the client terminal 120.

It is not the parameter $K_1$ or the feature F but the transformed feature $K_1F$ that is sent from the client terminal 120 to the first authentication server 100. Even if the transformed feature $K_1F$ of a user is leaked from the first authentication server 100 for some reason, the feature F itself is not leaked. Original biological information of the user is still kept in secret. Additionally, the first authentication server 100 is not capable of computing the parameter $K_1$ or the feature F only from the transformed feature $K_1F$. That is, the original biological information of the user is kept in secret even from the first authentication server 100 itself.

Template Sharing Processing

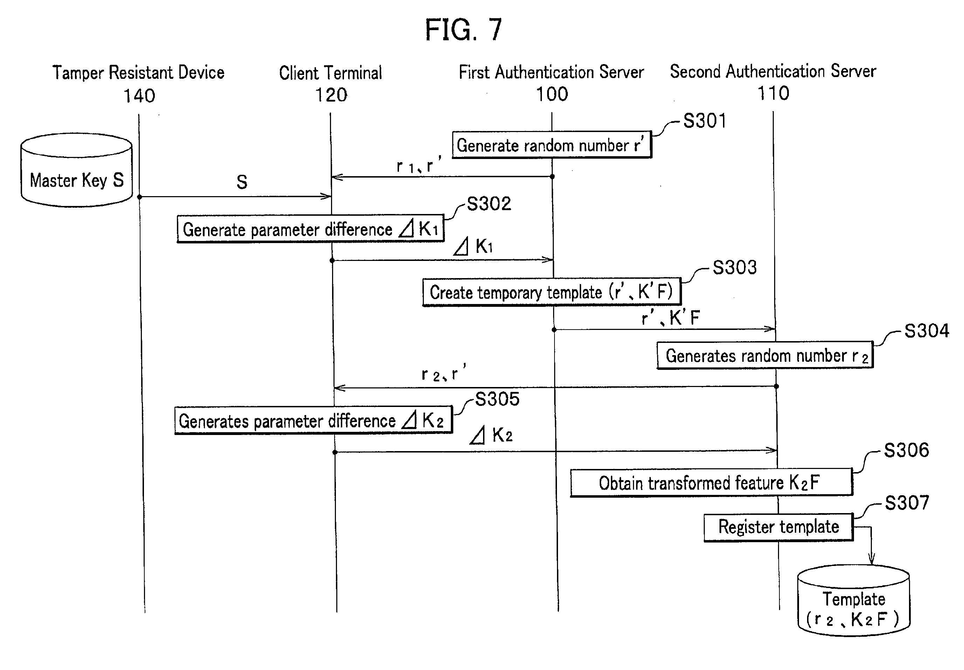

FIG. 7 is a flowchart of the template sharing processing from the first authentication server 100 to the second authentication server 110, according to the embodiment. The template sharing processing is executed when, for example, the second authentication server 110 requests the first authentication server 100 to acquire a template. The second authentication server 110 executes a request of acquiring a template, when, for example, a user operates the client terminal 120 to enter data such as a user ID number with an intention of using a service provided by the second authentication server 110.

In step S301, the first authentication server 100 generates a random number r'. The template storage unit 105 of the first authentication server 100 searches through the template database by the user ID number of a user of the client terminal 120 as a retrieval key. If the user ID number as the retrieval key is identical to the user ID number registered in the user ID number field 105a, the first authentication server 100 reads out a template corresponding to the user ID number in the template field 105b, which is the template $(r_1, K_1F)$. Then the first authentication server 100 reads out the random number $r_1$ from the template $(r_1, K_1F)$ and sends the random numbers $r_1$ and r' to the client terminal 120.

In step S302, the client terminal 120 reads out the master key S from the tamper resistant device 140 and generates a parameter difference $\Delta K_1$ from the master key S and the random numbers $r_1$ and r' received from the first authentication server 100. The parameter difference $\Delta K_1$ is generated by, for example, a method as follows. First, a parameter $K_1$ is generated from the master key S and the random number $r_1$ by, for example, obtaining a hash value of a bit-connected random number $r_1$ and master key S using some cryptographic hash function. Next, a parameter K' is generated from the master key S and the random number r' by, for example, obtaining a hash value of a bit-connected random number r' and master key S using some cryptographic hash function. Herein, $K_1$, K' and $\Delta K_1$ are each regarded as an image (a two-dimensional image constituted by an X-axis and a Y-axis which are at right angles to each other) and are thus expressed as $K_1(x, y)$, $K'(x, y)$, and $\Delta K_1(x, y)$, respectively. $\Delta K_1(x, y)$ can be calculated by an expression as follows:

$$\Delta K_1(x, \ y) = K'(x, \ y)/K_1(x, \ y)$$

The client terminal 120 sends the generated $\Delta K_1 1$ to the first authentication server 100.

In step S303, the first authentication server 100 creates a temporary template (r', K'F). K'F is generated by, for example, a method as follows. $K_1F$ and K'F are herein each regarded as an image (a two-dimensional image constituted by an X-axis and a Y-axis which are at right angles to each other) and are thus expressed as $K_1(x, y) F (x, y)$ and $K'(x, y) F (x, y)$, respectively. $K'(x, y)F(x, y)$ can be calculated by an expression as follows:

$$K'(x, \ y) F(x, \ y) = \Delta K_1(x, \ y) \times K_1(x, \ y) F(x, \ y)$$

Thus the temporary template (r', K'F) is created from both K'F and the random number r'1 having been generated in step S301 and is sent to the second authentication server 110.

In step S304, the second authentication server 110 generates a random number $r_2$. In the embodiment, the random number $r_2$ is generated by a commonly used method of generating a random number. However, the method of generating the random number $r_2$ is not limited to this. The second authentication server 110 reads out the random number r' from the temporary template (r', K'F) received from the first authentication server 100 and sends the random numbers $r_2$ and r' to the client terminal 120.

In step S305, the client terminal 120 generates a parameter difference $\Delta K_2$ from the random numbers $r_2$ and r' received from the second authentication server 110 and the master key S. The parameter difference $\Delta K_2$ is generated by, for example, a method as follows. First, a parameter $K_2$ is generated from the master key S and the random number $r_2$ by, for example, obtaining a hash value of a bit-connected random number $r_2$ and master key S using some cryptographic hash function. Next, a parameter K' is generated from the master key S and the random number r' by, for example, obtaining a hash value of a bit-connected random number r' and master key S using some cryptographic hash function. Herein, $K_2$, K' and $\Delta K_2$ are each regarded as an image (a two-dimensional image constituted by an X-axis and a Y-axis which are at right angles to each other) and are thus expressed as $K_2(x, y)$, $K'(x, y)$, and $\Delta K_2(x, y)$, respectively. $\Delta K_2(x, y)$ can be calculated by an expression as follows:

$$\Delta K_2(x, \ y) = K_2(x, \ y)/K'(x, \ y)$$

The client terminal 120 sends the generated $\Delta K_2$ to the second authentication server 110.

In step S306, the second authentication server 110 transforms K'F of the temporary template (r', K'F) with $\Delta K_2$

received from the client terminal 120 to thereby generate $K_2F$. A method of transforming $K_2F$ is, for example, as follows. $\Delta K_2$, K'F and $K_2F$ are each regarded as an image (a two-dimensional image constituted by an X-axis and a Y-axis which are at right angles to each other) and are thus expressed as $\Delta K_2(x, y)$, K' $(x, y)F(x, y)$, and $K_2(x, y)F(x, y)$, respectively. $K_2(x, y)F(x, y)$ can be calculated by an expression as follows:

$$K_2(x, \ y) F(x, \ y) = \Delta K_2(x, \ y) \times K'(x, \ y) F(x, \ y)$$

In step S307, the second authentication server 110 creates a template ($r_2$, $K_2F$) with both the random number $r_2$ and $K_2F$ and registers the template in the template storage unit 105. A user ID number of a user of the client terminal 120 who is a target in the template sharing processing is registered into the user ID number field 105a of the template database. A template of the user is registered into the template field 105b.

Thus, the first authentication server 100 can transfer the template ($r_2$, $K_2F$) to the second authentication server 110, while keeping the template ($r_1$, $K_1F$) managed by itself in secret. In other words, the second authentication server 110 receives the template ($r_2$, $K_2F$) without knowing the template ($r_1$, $K_1F$) of the first authentication server 100. This allows a secure sharing of a template between the authentication servers 100,110. Further, data sent from the client terminal 120 to the authentication servers 100,110 is not the parameter $K_1$ or $K_2$ itself but a difference between the parameters. This eliminates a concern that the feature F constituted by the transformed features $K_1F$ or $K_2F$ is known to the authentication servers 100,110.

Authentication Processing

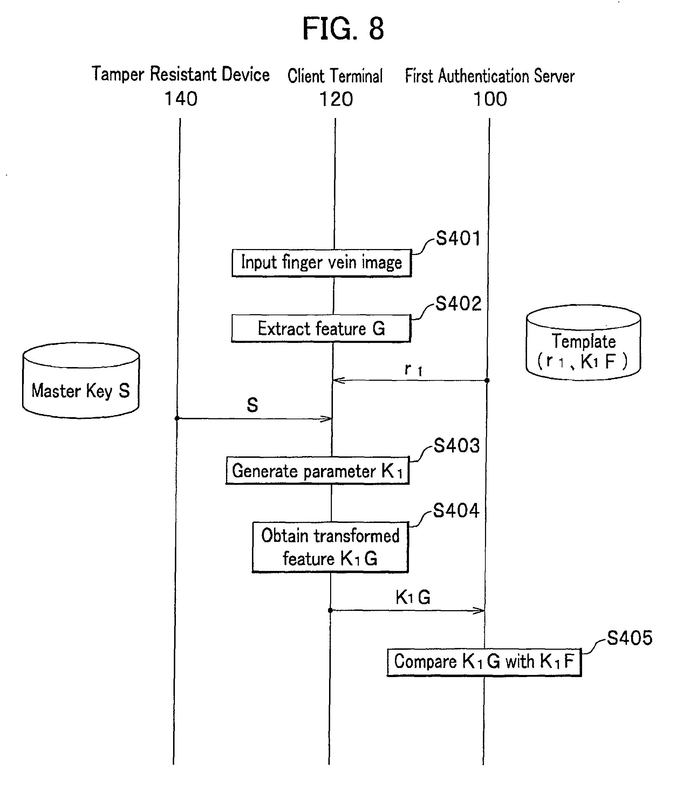

FIG. 8 shows a flowchart of the authentication processing in the first authentication server 100. The authentication processing is executed when, for example, a user operates the client terminal 120 to enter data such as a user ID number with an intention of using a service provided by the first authentication server 100.

In step S401, the client terminal 120 acquires a finger vein image of the user via the finger vein sensor 130. In step S402, the client terminal 120 extracts a feature G from the acquired finger vein image. In the embodiment, the feature G is extracted by, for example, the method described in Naoto Miura, Akio Nagasaka, and Takafumi Miyatake, "Feature extraction of finger-vein patterns based on repeated line tracking and it's application to personal identification", Machine Vision and Applications, Vol.15, pp.194-203, 2004, detailed description of which is omitted herefrom.

In step S403, the client terminal 120 receives $r_1$ from the first authentication server 100, and reads out the master key S from the tamper resistant device 140, to generate a parameter $K_1$ therefrom.

The first authentication server 100 performs steps as follows, when the first authentication server 100 sends $r_1$ to the client terminal 120. Namely, the template storage unit 105 of the first authentication server 100 searches through the template database by the user ID number of the user of the client terminal 120 as a retrieval key. If the user ID number as the retrieval key is identical to the user ID number registered in the user ID number field 105a, the first authentication server 100 reads out a template corresponding to the user ID number in the template field 105b, which is the template ($r_1$, $K_1F$). Then the first authentication server 100 reads out the random number $r_1$ from the template ($r_1$, $K_1F$) and sends the random number $r_1$ to the client terminal 120.

In the embodiment, the parameter $K_1$ is generated by, for example, obtaining a hash value of a bit-connected random number $r_1$ and master key S using some cryptographic hash function. However, the method of generating the master key S is not limited to this.

In step S404, the client terminal 120 transforms the feature G with the parameter $K_1$. In the embodiment, the feature G is transformed by, for example, the method described in Shinji Hirata, Kenta Takahashi, and Masahiro Mimura "A Proposition of Cancelable Biometrics Applicable to Biometric Authentication based on Image Matching", 2006-CSEC-34, pp.45-440, 2006, detailed description of which is omitted herefrom. The client terminal 120 sends the feature after the transformation (transformed feature) $K_1G$ to the first authentication server 100.

In step S405, the first authentication server 100 compares the received $K_1G$ with $K_1F$ included in the template ($r_1$, $K_1F$), to thereby determine the user's identity. In the embodiment, $K_1G$ and $K_1F$ are compared with each other by the method described in Shinji Hirata, Kenta Takahashi, and Masahiro Mimura "A Proposition of Cancelable Biometrics Applicable to Biometric Authentication based on Image Matching", 2006-CSEC-34, pp.45-440, 2006, detailed description of which is omitted herefrom. In the embodiment, the features in transformed states are directly compared with each other to conduct authentication, without a need of decoding encrypted data which is performed in, for example, an authentication method according to related art.

Template Update Processing

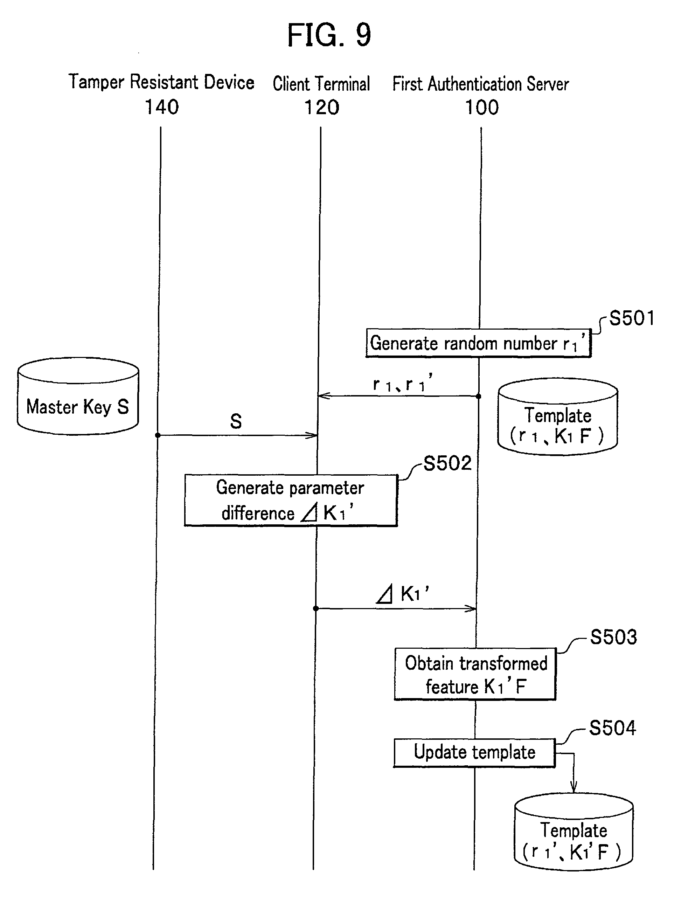

FIG. 9 is a flowchart of the template update processing in the first authentication server 100. The template update processing is executed when, for example, a user operates the client terminal 120 to enter data such as a user ID number and requests the first authentication server 100 to change a current transformed feature contained in a registered template, or when a registered template is leaked due to an unexpected accident.

In step S501, the first authentication server 100 generates a random number $r_1$'. In the embodiment, the random number $r_1$' is generated by a commonly used method of generating a random number. However, the method of generating the random number $r_1$ is not limited to this. The template storage unit 105 of the first authentication server 100 searches through the template database by the user ID number of a user of the client terminal 120 as a retrieval key. If the user ID number as the retrieval key is identical to the user ID number registered in the user ID number field 105a, the first authentication server 100 reads out a template corresponding to the user ID number in the template field 105b, which is the template ($r_1$, $K_1F$). Then the first authentication server 100 reads out the random number $r_1$ from the template ($r_1$, $K_1F$) and sends the random numbers $r_1$ and $r_1$' to the client terminal 120.

In step S502, the client terminal 120 generates a parameter difference $\Delta K_1$' from $r_1$ and $r_1$' and the master key S, which is read out from the tamper resistant device 140. The parameter difference $\Delta K_1$' is generated by, for example, a method as follows. First, a parameter $K_1$ is generated from the master key S and the random number $r_1$ by, for example, obtaining a hash value of a bit-connected random number $r_1$ and master key S using some cryptographic hash function. Next, a parameter K' is generated from the master key S and the random number $r_1$' by, for example, obtaining a hash value of a bit-connected random number r' and master key S using some cryptographic hash function. Herein, $K_1$, $K_1$' and $\Delta K_1$ are each regarded as an image (a two-dimensional image constituted by an X-axis and a Y-axis which are at right angles to each other) and are thus expressed as $K_1(x, y)$, $K_1'(x, y)$, and $\Delta K_1(x, y)$, respectively. $\Delta K_1(x, y)$ can be calculated by an expression as follows:

$$\Delta K_1'(x,\ y)=K_1'(x,\ y)/K_1(x,\ y)$$

The client terminal 120 sends the generated $\Delta K_1$' to the first authentication server 100.

In step S503, the first authentication server 100 transforms $K_1F$ included in the template ($r_1$, $K_1F$) with the registered $\Delta K_1$', to thereby generate a new transformed feature $K_1'F$. $K_1F$ is transformed by, for example, a method as follows. Herein, $K_1F$, $K_1'F$ and $\Delta K_1$' are each regarded as an image (a two-dimensional image constituted by an X-axis and a Y-axis which are at right angles to each other) and are thus expressed as $K_1(x, y) F(x, y)$, $K_1'(x, y) F(x, y)$, and $\Delta K_1'(x, y)$, respectively. $K_1(x, y)F(x, y)$ can be calculated by an expression as follows:

$$K_1'(x,\ y)F(x,\ y)=\Delta K_1'(x,\ y)\times K_1(x,\ y)F(x,\ y)$$

In step S504, the template storage unit 105 of the first authentication server 100 stores therein an updated template ($r_1$', $K_1'F$) with both $r_1$' and $K_1'F$. More specifically, in the template database, the template storage unit 105 identifies a user ID number of a user who is a target in the template update processing stored in the user ID number field 105a. The template storage unit 105 then registers an updated template ($r_1$', $K_1'F$), in place of the original template ($r_1$, $K_1F$) of the identified user. The original template ($r_1$, $K_1F$) is deleted.

This can reduce a possible negative influence in case of leaking of the original template. Further, data sent from the client terminal 120 to the authentication servers 100,110 is not the parameter $K_1$ or $K_1$' but a parameter difference therebetween. This eliminates a concern that the feature F constituted by the transformed features $K_1F$ or $K_1'F$ is known to the authentication servers 100,110.

In the embodiment, in the cancelable finger vein authentication system in which a plurality of authentication servers are provided, a template is shared in the authentication servers with security. This can reduce a burden of a user and a service provider for registration. An authentication server which receives a template in the template sharing processing is not required to execute a registration processing any more. The service provider is not required to establish a contact point for registration. The user is not required to go to the contact point to take necessary procedures for registration.

In the embodiment, data stored in the tamper resistant device is only a single master key, because a parameter is generated from the single master key in the tamper resistant device and a random number managed by an authentication server. This requires less memory capacity in the tamper resistant device compared with a system where parameters for each authentication server are stored therein. This is advantageous because an existing memory capacity of the tamper resistant device may be sufficient even if the system includes a number of authentication servers.

In the embodiment, biometric information of a user is shared between two authentication servers. This is advantageous because one finger vein sensor which is connected to each client terminal suffices, thus reducing a cost associated with the sensor.

The above-mentioned embodiment is exemplary in implementing the biometrics authentication system according to the present invention. However, the present invention is not limited to the embodiment, and various modifications and variations are possible without departing from the gist of the present invention.

In the embodiment, the user authentication system includes two authentication servers. However, the authentication system may include three or more authentication servers. Further, the authentication system may include a plurality of client terminals.

Even with the system having three or more authentication servers, the present invention is still generally applicable.

For example, suppose that a template of a user is shared among three authentication servers, and a first authentication server in which a template has been already registered transfers the template to a second and a third authentication server. Two cases of transfer are possible. Case 1 is that the second authentication server receives the template from the first authentication server, and the third authentication server also receives the template from the first authentication server. Case 2 is that the second authentication server receives the template from the first authentication server, and the third authentication server receives the template from the second authentication server.

In Case 1, the template received by the third authentication server is subjected to one template sharing processing. On the other hand, in Case 2, two template sharing processings. Nevertheless, the template sharing herein means that an authentication server receives a template and creates a unique template therefrom. Thus, a template created and managed by the third authentication server is always a template created by itself in either Case 1 or Case 2. Therefore, the template managed by the third authentication server is not known to the first or second authentication server. In this sense, the present invention is applicable to both Cases 1 and 2.

In the embodiment, a parameter for transforming a feature is generated by obtaining a hash value of a bit-connected master key (for example, a random number) and random number obtained from an authentication server using some cryptographic hash function. However, the method of generating a parameter is not limited to this. For example, in another method, a master key bit-connected to a random number is transformed with a one-way function other than the hash function, and a reversible processing for restoring the original bit-connected value from the hash value is designed to be unallowable.

In the embodiment, the tamper resistant device 140 is used for storing the master key. Tamper resistance owned by the tamper resistant device 140 may be enhanced with a logical or a physical means. For example, the logical means may be a software-related technique such as obfuscation which prevents analysis with a disassembler or the like. The physical means may be a hardware-related technique such as an LSI (Large Scale Integration Circuit) of which analysis is impossible because peel-off of a protective layer is designed to destroy its inner circuit all together.

In the embodiment, the master key is stored in the tamper resistant device 140. However, the master key may not be stored therein and may be memorized by a user as a password including characters, numerals, or a combination thereof. The user may input the password into the input unit 120a of the client terminal 120, when necessary.

The present invention can be applied to any biometrics authentication system in which biometric information of a user is registered in a server for verifying identity of the user. Examples of such a biometrics authentication system include an information access control in an in-house network, an Internet banking system, an ID system at an ATM (Automated Teller Machine), a login to a Web site only available to members, a personal authentication for entering a specific area, and the like.

**Claims**

1. An authentication server connectable to a client terminal via a network and executing an authentication processing of a user according to an authentication request using biometrics authentication of the user from the client terminal, comprising:

an authentication execution unit for executing an authentication processing of the user, in which the client terminal extracts a feature of the user from biometric information of the user and transforms the extracted feature with a parameter for transforming the feature to generate a transformed feature, the authentication execution unit executing the authentication processing by receiving the transformed feature as the authentication request sent from the client terminal and comparing the received transformed feature with a transformed feature for comparison for identifying the user of interest;
a storage unit provided with a template database having a user identification field for registering therein information for identifying a user and a template field for registering therein a template at least constituting a transformed feature for comparison; and

a template transformation unit for transforming the template in the template database,

the template transformation unit obtaining a first difference parameter received from the client terminal, which is a difference between the parameter and another parameter having a different value from the former parameter, transforming the transformed feature for comparison of the template of the user in the template database with the received first difference parameter, creating a temporary template transformed from the template and constituting a temporary transformed feature for identifying the user, and sending the temporary template to another authentication server provided with the template database, and

the template transformation unit further obtaining a second difference parameter received from the client terminal, which is a difference between the parameter and another parameter having a different value from the former parameter, transforming the received temporary transformed feature with the received second parameter and the temporary template transformed with the first difference parameter, creating a new template constituting a new transformed feature for identifying the user by transforming the temporary transformed feature of the received temporary template with the received second difference parameter, and registering therein the new template in the template database.

2. An authentication server in a biometrics authentication system in which a client terminal is connected via a network to a plurality of authentication servers for executing an authentication processing of a user, the client terminal extracting a feature of the user from biometric information of the user and transforming the extracted feature with a parameter for transforming the feature to generate a transformed feature, a plurality of the authentication servers executing the authentication processing of the user by comparing the transformed feature received from the client terminal with a transformed feature registered in advance for identifying the user, each of the authentication servers comprising:

   a storage unit provided with a template database having a user identification field for registering therein information for identifying a user and a template field for registering therein a template at least constituting a transformed feature of the user; and

   a template transformation unit for transforming a template by transforming a transformed feature of the template with a difference parameter received from the client terminal, which is a difference between the parameter and another parameter having a different value from the former parameter,

   in one of a plurality of the authentication servers,

   the template transformation unit creating a temporary template constituting at least a temporary transformed feature for identifying the user by transforming the template, and

   sending the temporary template to another authentication server.

3. An authentication server in a biometrics authentication system in which a client terminal is connected via a network to a plurality of authentication servers for executing an authentication processing of a user, the client terminal extracting a feature of the user from biometric information of the user and transforming the extracted feature with a parameter for transforming the feature to generate a transformed feature, a plurality of the authentication servers executing the authentication processing of the user by comparing the transformed feature received from the client terminal with a transformed feature registered in advance for identifying the user, each of the authentication servers comprising:

   a storage unit provided with a template database having a user identification field for registering therein information for identifying a user and a template field for registering therein a template at least constituting a transformed feature of the user; and

   a template transformation unit for transforming a template by transforming a transformed feature of the template with a difference parameter received from the client terminal, which is a difference between the parameter and another parameter having a different value from the former parameter,

   in one of a plurality of the authentication servers,

   receiving, from another authentication server, a temporary template constituting at least a temporary transformed feature for identifying the user and created by the template transformation unit of the another authentication server,

   receiving, from the client terminal, another difference parameter having a value different from the difference parameter sent from the client terminal to the another authentication server,

   the template transformation unit creating a new template constituting at least a new transformed feature for identifying the user by transforming the temporary transformed feature of the temporary template with the another difference parameter received from the client terminal, and

registering, in the template database provided with the storage unit, the created new template into the template field, and information for identifying a user identified by the new transformed feature constituted by the created new template into the user identification field.

4. An authentication server in a biometrics authentication system in which a client terminal is connected via a network to a plurality of authentication servers for executing an authentication processing of a user, the client terminal extracting a feature of the user from biometric information of the user and transforming the extracted feature with a parameter for transforming the feature to generate a transformed feature, a plurality of the authentication servers executing the authentication processing of the user by comparing the transformed feature received from the client terminal with a transformed feature registered in advance for identifying the user, each of the authentication servers comprising:

a storage unit provided with a template database having a user identification field for registering therein information for identifying a user and a template field for registering therein a template at least constituting a transformed feature of the user; and

a template transformation unit for transforming a template by transforming a transformed feature of the template with a difference parameter received from the client terminal, which is a difference between the parameter and another parameter having a different value from the former parameter,

in one of a plurality of the authentication servers,

transforming the template by the template transformation unit to create a new template constituting at least a new transformed feature for identifying the user by, and

searching, in the template database provided with the storage unit, through the user identification field, determining a user identified by the new transformed feature, and registering the created new template into thee template field in place of the template corresponding to the determined user.

5. A client terminal in a biometrics authentication system in which the client terminal is connected via a network to a plurality of authentication servers for executing an authentication processing of a user, the client terminal extracting a feature of the user from biometric information of the user and transforming the extracted feature with a parameter for transforming the feature to generate a transformed feature, and a plurality of the authentication servers executing an authentication processing of the user by comparing the transformed feature the transformed feature received from the client terminal with a transformed feature registered in advance for identifying the user, the client terminal comprising:

a parameter generation unit for generating a parameter by performing an operation with a master key obtained from a storage medium connectable to the client terminal and a random number obtained from one of the authentication servers using a predetermined function,

the client terminal sending a transformed feature for identifying the user generated by transforming the feature with the created parameter, to the one authentication server having sent the random number for generating the parameter.

6. The client terminal according to Claim 5,

wherein a plurality of the authentication servers are each provided with a template constituting at least a transformed feature for identifying a user of interest and a random number used by the parameter generation unit of the client terminal for creating a parameter, and

wherein, in the client terminal, a random number constituted by the template and another random number having a value different from the former random number are obtained from one of the authentication servers; the parameter generation unit generates a difference parameter which is a difference between the parameter generated by performing an operation with the master key and the random number constituted by the template using the predetermined function, and another parameter generated by performing an operation with the master key and the another random number using the predetermined function; and the difference parameter is sent to the one authentication server.

7. The client terminal according to Claim 5,

wherein the predetermined function is a cryptographic hash function, and

wherein the parameter generation unit generates the parameter by bit-connecting the master key obtained from the storage medium to the random number obtained from the one authentication server and performing an operation with the obtained bit-connected value using the hash function.

**8.** A biometric authentication system in which a client terminal is connected via a network to a plurality of authentication servers for executing an authentication processing of a user, the client terminal extracting a feature of the user from biometric information of the user and transforming the extracted feature with a parameter for transforming the feature to generate a transformed feature, a plurality of the authentication servers executing the authentication processing of the user by comparing the transformed feature received from the client terminal with a transformed feature registered in advance for identifying the user, each of the authentication servers comprising:

a storage unit provided with a template database having a user identification field for registering therein information for identifying a user and a template field for registering therein a template at least constituting a transformed feature of the user; and
a template transformation unit for transforming a template by transforming a transformed feature of the template with a difference parameter received from the client terminal, which is a difference between the parameter and another parameter having a different value from the former parameter,
in the biometric authentication system, in one of a plurality of the authentication servers,
the difference parameter being received from the client terminal as a first difference parameter,
the template transformation unit creating a temporary template constituting at least a temporary transformed feature for identifying the user generated from the template by transforming the transformed feature of the template with the first difference parameter, and
the temporary template being sent to another authentication server,
in another authentication server,
the temporary template being received from the one authentication server,
a second difference parameter having a different value from the first difference parameter sent from the client terminal to the one authentication server being received,
the template transformation unit creating a new template constituting at least a new transformed feature for identifying the user by transforming the temporary transformed feature of the temporary template with the second difference parameter received from the client terminal, and
the created new template being registered into the template field in the template database of the storage unit, and information for identifying a user identified by the new transformed feature constituted by the created new template being registered into the user identification field.

**9.** The biometric authentication system according to Claim 8,
wherein the client terminal comprises a parameter generation unit for generating a parameter by performing an operation with a master key obtained from a storage medium connectable to the client terminal and a random number obtained from the authentication servers using a predetermined function,
in each of a plurality of the authentication servers, the template registered in the template database of the storage unit further being constituted by the random number used by the parameter generation unit of the client terminal for generating a parameter, and
in the client terminal,
a first random number constituting the template and another first random number having a value different from the first random number and constituting the temporary template, being obtained from the one authentication server,
the parameter generation unit generating the first difference parameter which is a difference between the first parameter generated by performing an operation with the master key and the first random number constituting the template using the predetermined function, and the another first parameter generated by performing an operation with the master key and the another first random number using the predetermined function,
the first difference parameter being sent to the first authentication server,
the another first random number constituting the temporary template and a second random number having a different value from the another first random number being obtained from the another authentication server.
the parameter generation unit generating the second difference parameter which is a difference between the second parameter generated by performing an operation with the master key and the another first random number constituting the template using the predetermined function, and the another second parameter generated by performing an operation with the master key and the second random number using the predetermined function, and
the second difference parameter being sent to the another authentication server.

**10.** A biometric authentication system in which a client terminal is connected via a network to a plurality of authentication servers for executing an authentication processing of a user, the client terminal extracting a feature of the user from biometric information of the user and transforming the extracted feature with a parameter for transforming the feature to generate a transformed feature, a plurality of the authentication servers executing the authentication processing of the user by comparing the transformed feature received from the client terminal with a transformed feature registered in advance for identifying the user, each of the authentication servers comprising:

a storage unit provided with a template database having a user identification field for registering therein information for identifying a user and a template field for registering therein a template at least constituting a transformed feature of the user; and
a template transformation unit for transforming a template by transforming a transformed feature of the template with a difference parameter received from the client terminal, which is a difference between the parameter and another parameter having a different value from the former parameter,
in the biometric authentication system, in one of a plurality of the authentication servers,
the difference parameter being received from the client terminal,
the template transformation unit creating a new template constituting at least a new transformed feature for identifying the user generated from the template by transforming the transformed feature of the template with the difference parameter, and
in the template database of the storage unit, the user identification field being searched, determining a user identified by the new transformed feature, and the created new template being registered therein in place of the template corresponding to the determined user.

11. The biometric authentication system according to Claim 10,
wherein the client terminal comprises a parameter generation unit for generating a parameter by performing an operation with a master key obtained from a storage medium connectable to the client terminal and a random number obtained from the authentication servers using a predetermined function,
in each of a plurality of the authentication servers, the template registered in the template database of the storage unit further being constituted by the random number used by the parameter generation unit of the client terminal for generating a parameter, and
in the client terminal,
a random number constituting the template and another random number having a value different from the former random number being obtained from the one authentication server,
the parameter generation unit generating the difference parameter which is a difference between the parameter generated by performing an operation with the master key and the random number constituting the template using the predetermined function, and another parameter generated by performing an operation with the master key and the another random number using the predetermined function, and
the difference parameter being sent to the one authentication server.

12. A biometrics authentication method executed in an authentication server in a biometrics authentication system in which a client terminal is connected via a network to a plurality of authentication servers for executing an authentication processing of a user, the client terminal extracting a feature of the user from biometric information of the user and transforming the extracted feature with a parameter for transforming the feature to generate a transformed feature, a plurality of the authentication servers executing the authentication processing of the user by comparing the transformed feature received from the client terminal with a transformed feature registered in advance for identifying the user, each of the authentication servers comprising:

a storage unit provided with a template database having a user identification field for registering therein information for identifying a user and a template field for registering therein a template at least constituting a transformed feature of the user; and
a template transformation unit for transforming a template by transforming a transformed feature of the template with a difference parameter received from the client terminal, which is a difference between the parameter and another parameter having a different value from the former parameter,
the biometrics authentication method comprising the steps, executed in one of a plurality of the authentication servers, of:

creating a temporary template constituting at least a temporary transformed feature for identifying the user by transforming the template by the template transformation unit; and
sending the temporary template to another authentication server.

13. A biometrics authentication method executed in an authentication server in a biometrics authentication system in which a client terminal is connected via a network to a plurality of authentication servers for executing an authentication processing of a user, the client terminal extracting a feature of the user from biometric information of the user and transforming the extracted feature with a parameter for transforming the feature to generate a transformed feature, a plurality of the authentication servers executing the authentication processing of the user by comparing the transformed feature received from the client terminal with a transformed feature registered in advance for identifying the user, each of the authentication servers comprising:

a storage unit provided with a template database having a user identification field for registering therein information for identifying a user and a template field for registering therein a template at least constituting the transformed feature of the user; and
a template transformation unit for transforming a template by transforming a transformed feature of the template with a difference parameter received from the client terminal, which is a difference between the parameter and another parameter having a different value from the former parameter,
the biometrics authentication method comprising the steps, executed in one of a plurality of the authentication servers, of:

receiving, from another authentication server, a temporary template constituting at least a temporary transformed feature for identifying the user and created by the template transformation unit of the another authentication server,
receiving, from the client terminal, another difference parameter having a value different from the difference parameter sent from the client terminal to the another authentication server;
creating a new template constituting at least a new transformed feature for identifying the user by transforming, by the template transformation unit, the temporary transformed feature of the temporary template with the another difference parameter received from the client terminal; and
registering, in the template database of the storage unit, the created new template into the template field, and information for identifying a user identified by the new transformed feature constituted by the created new template into the user identification field.

14. A biometrics authentication method executed in an authentication server in a biometrics authentication system in which a client terminal is connected via a network to a plurality of authentication servers for executing an authentication processing of a user, the client terminal extracting a feature of the user from biometric information of the user and transforming the extracted feature with a parameter for transforming the feature to generate a transformed feature, a plurality of the authentication servers executing the authentication processing of the user by comparing the transformed feature received from the client terminal with a transformed feature registered in advance for identifying the user, each of the authentication servers comprising:

a storage unit provided with a template database having a user identification field for registering therein information for identifying a user and a template field for registering therein a template at least constituting a transformed feature of the user; and
a template transformation unit for transforming a template by transforming a transformed feature of the template with a difference parameter received from the client terminal, which is a difference between the parameter and another parameter having a different value from the former parameter,
the biometrics authentication method comprising the steps, executed in one of a plurality of the authentication servers, of:

transforming the template by the template transformation unit to create a new template constituting at least a new transformed feature for identifying the user; and
searching, in the template database of the storage unit, through the user identification field, determining a user identified by the new transformed feature, and registering the created new template into the template field in place of the template corresponding to the determined user.

15. A biometrics authentication method executed in a client terminal in a biometrics authentication system in which the client terminal is connected via a network to a plurality of authentication servers for executing an authentication processing of a user, the client terminal extracting a feature of the user from biometric information of the user and transforming the extracted feature with a parameter for transforming the feature to generate a transformed feature, a plurality of the authentication servers executing the authentication processing of the user by comparing the transformed feature received from the client terminal with a transformed feature registered in advance for identifying the user, the client terminal comprising a parameter generation unit for generating a parameter by performing an operation with a master key obtained from a storage medium connectable to the client terminal and a random number obtained from the authentication server using a predetermined function, the biometrics authentication method comprising the step, executed in the client terminal, of sending a transformed feature for identifying the user generated by transforming the feature with the created parameter, to the authentication server having sent the random number for generating the parameter.

16. The biometrics authentication method according to Claim 15,
wherein the authentication server is provided with a template constituted at least by a transformed feature for identifying the user and the random number used by the parameter generation unit of the client terminal for generating a parameter, and
wherein the biometrics authentication method comprises the steps, executed in the client terminal, of:

obtaining the random number constituting the template and another random number having a value different from the random number;
generating, by the parameter generation unit, a difference parameter which is a difference between the parameter generated by performing an operation with the master key and the random number constituted by the template using the predetermined function, and another parameter generated by performing an operation with the master key and the another random number using the predetermined function; and
sending the difference parameter to the authentication server.

17. A program executed by an authentication server in a biometrics authentication system in which a client terminal is connected via a network to a plurality of authentication servers for executing an authentication processing of a user, the client terminal extracting a feature of the user from biometric information of the user and transforming the extracted feature with a parameter for transforming the feature to generate a transformed feature, a plurality of the authentication servers executing the authentication processing of the user by comparing the transformed feature received from the client terminal with a transformed feature registered in advance for identifying the user, each of the authentication servers comprising:

a storage unit provided with a template database having a user identification field for registering therein information for identifying a user and a template field for registering therein a template at least constituting a transformed feature of the user; and
a template transformation unit for transforming a template by transforming a transformed feature of the template with a difference parameter received from the client terminal, which is a difference between the parameter and another parameter having a different value from the former parameter,
the program comprising the processings, executed in one of a plurality of the authentication servers, of:

creating a temporary template constituting at least a temporary transformed feature for identifying the user by transforming the template by the template transformation unit; and
sending the temporary template to another authentication server.

18. A program executed by an authentication server in a biometrics authentication system in which a client terminal is connected via a network to a plurality of authentication servers for executing an authentication processing of a user, the client terminal extracting a feature of the user from biometric information of the user and transforming the extracted feature with a parameter for transforming the feature to generate a transformed feature, a plurality of the authentication servers executing the authentication processing of the user by comparing the transformed feature received from the client terminal with a transformed feature registered in advance for identifying the user, each of the authentication servers comprising:

a storage unit provided with a template database having a user identification field for registering therein information for identifying a user and a template field for registering therein a template at least constituting the transformed feature of the user; and
a template transformation unit for transforming a template by transforming a transformed feature of the template with a difference parameter received from the client terminal, which is a difference between the parameter and another parameter having a different value from the former parameter,
the program comprising the processings, executed in one of a plurality of the authentication servers, of:

receiving, from another authentication server, a temporary template constituting at least a temporary transformed feature for identifying the user and created by the template transformation unit of the another authentication server,
receiving, from the client terminal, another difference parameter having a value different from the difference parameter sent from the client terminal to the another authentication server;

creating a new template constituting at least a new transformed feature for identifying the user by transforming, by the template transformation unit, the temporary transformed feature of the temporary template with the another difference parameter received from the client terminal; and

registering, in the template database of the storage unit, the created new template into the template field, and information for identifying a user identified by the new transformed feature constituted by the created new template into the user identification field.

**19.** A program executed by an authentication server in a biometrics authentication system in which a client terminal is connected via a network to a plurality of authentication servers for executing an authentication processing of a user, the client terminal extracting a feature of the user from biometric information of the user and transforming the extracted feature with a parameter for transforming the feature to generate a transformed feature, a plurality of the authentication servers executing the authentication processing of the user by comparing the transformed feature received from the client terminal with a transformed feature registered in advance for identifying the user, each of the authentication servers comprising:

a storage unit provided with a template database having a user identification field for registering therein information for identifying a user and a template field for registering therein a template at least constituting a transformed feature of the user; and

a template transformation unit for transforming a template by transforming a transformed feature of the template with a difference parameter received from the client terminal, which is a difference between the parameter and another parameter having a different value from the former parameter,

the program comprising the processings, executed in one of a plurality of the authentication servers, of:

transforming the template by the template transformation unit to create a new template constituting at least a new transformed feature for identifying the user; and

searching, in the template database of the storage unit, through the user identification field, determining a user identified by the new transformed feature, and registering the created new template into the template field in place of the template corresponding to the determined user.

**20.** A program executed by a client terminal in a biometrics authentication system in which the client terminal is connected via a network to a plurality of authentication servers for executing an authentication processing of a user, the client terminal extracting a feature of the user from biometric information of the user and transforming the extracted feature with a parameter for transforming the feature to generate a transformed feature, a plurality of the authentication servers executing the authentication processing of the user by comparing the transformed feature received from the client terminal with a transformed feature registered in advance for identifying the user, the client terminal comprising a parameter generation unit for generating a parameter by performing an operation with a master key obtained from a storage medium connectable to the client terminal and a random number obtained from the authentication server using a predetermined function,

the program comprising the processings, executed in the client terminal, of sending a transformed feature for identifying the user generated by transforming the feature with the created parameter, to the authentication server having sent the random number for generating the parameter.

**21.** The program according to Claim 20,

wherein the authentication server is provided with a template constituted at least by a transformed feature for identifying the user and the random number used by the parameter generation unit of the client terminal for generating a parameter, and

wherein the program comprises the processings, executed in the client terminal, of:

obtaining the random number constituting the template and another random number having a value different from the random number;

generating, by the parameter generation unit, a difference parameter which is a difference between the parameter generated by performing an operation with the master key and the random number constituted by the template using the predetermined function, and another parameter generated by performing an operation with the master key and the another random number using the predetermined function; and

sending the difference parameter to the authentication server.

# FIG. 1

100

## First Authentication Server

Input Unit ⌐100a

Control Unit ⌐100b

Storage Unit ⌐100c

Output Unit ⌐100d

110

## Second Authentication Server

Input Unit ⌐110a

Control Unit ⌐110b

Storage Unit ⌐110c

Output Unit ⌐110d

150 Network

120

## Client Terminal

Input Unit ⌐120a

Control Unit ⌐120b

Storage Unit ⌐120c

Output Unit ⌐120d

130

Finger Vein Sensor

Tamper Resistant Device ⌐140

# FIG. 2

100

**First Authentication Server**

105

Template Storage Unit

Template

103

Transformation Unit

101

Comparison Unit

104

Random Number Generation Unit

102

Communication Unit

To Network 150

# FIG. 3

| 105a | 105b |
|---|---|
| User ID number field | Template field |
| 00001 | ( $r_1$, $K_1$ $F_1$ ) |
| 00002 | ( $r_2$, $K_2$ $F_2$ ) |
| 00003 | ( $r_3$, $K_3$ $F_3$ ) |
| ⋮ | ⋮ |

# FIG. 4

Client Terminal **120**

Finger Vein Sensor **130**

Feature Extract Unit **121**

Parameter Generation Unit **124**

Transformation Unit **122**

Master Key Generation Unit **125**

Tamper Resistant Device Interface Unit **126**

Communication Unit **123**

To Network 150

To Tamper Resistant Device 140

EP 2 037 387 A1

# FIG. 5

To Client Terminal 120

Communication Unit — 141

Master Key Storage Unit — 142

Master key S

Tamper Resistant Device

140

# FIG. 6

| Tamper Resistant Device 140 | Client Terminal 120 | First Authentication Server 100 |
| --- | --- | --- |

S201
Generate random number $r_1$

$r_1$

S202
Input finger vein image

S203
Extract feature F

S204
Generates master key S

S205
Generate parameter $K_1$

S206
Obtain transformed feature $K_1F$

$K_1F$

S

S207
Register template

S208
Store master key S

Master Key S

Template
$(r_1, K_1F)$

# FIG. 7

| Tamper Resistant Device 140 | Client Terminal 120 | First Authentication Server 100 | Second Authentication Server 110 |

Master Key S

$S$

$r_1, r'$

S301 — Generate random number $r'$

S302 — Generate parameter difference $\triangle K_1$

$\triangle K_1$

S303 — Create temporary template $(r', K'F)$

$r', K'F$

S304 — Generates random number $r_2$

$r_2, r'$

S305 — Generates parameter difference $\triangle K_2$

$\triangle K_2$

S306 — Obtain transformed feature $K_2F$

S307 — Register template

Template $(r_2, K_2F)$

EP 2 037 387 A1

# FIG. 8

Tamper Resistant Device
140

Client Terminal
120

First Authentication Server
100

S401 Input finger vein image

S402 Extract feature G

$r_1$

Template
$(r_1 , K_1 F)$

Master Key S

S

S403 Generate parameter $K_1$

S404 Obtain transformed feature $K_1 G$

$K_1 G$

S405 Compare $K_1 G$ with $K_1 F$

# FIG. 9

Tamper Resistant Device
140

Client Terminal
120

First Authentication Server
100

Generate random number $r_1{}'$ — S501

$r_1, r_1{}'$

Master Key S

S

Template
$(r_1, K_1 F)$

Generate parameter
difference $\triangle K_1{}'$ — S502

$\triangle K_1{}'$

Obtain transformed
feature $K_1{}' F$ — S503

Update template — S504

Template
$(r_1{}', K_1{}' F)$

Europäisches
Patentamt

European
Patent Office

Office européen
des brevets

## EUROPEAN SEARCH REPORT

Application Number

EP 08 25 2904

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | RATHA N K ET AL: "ENHANCING SECURITY AND PRIVACY IN BIOMETRICS-BASED AUTHENTICATION SYSTEMS" IBM SYSTEMS JOURNAL, IBM CORP. ARMONK, NEW YORK, US, vol. 40, no. 3, 1 January 2001 (2001-01-01), pages 614-634, XP001116337 ISSN: 0018-8670 * pages 630-632; figures 9,14 * ----- | 1-21 | INV. G06F21/20 |
| Y | WO 02/095657 A (IRIDIAN TECHNOLOGIES INC [US]; BRAITHWAITE MICHAEL [US]; VON SEELEN UL) 28 November 2002 (2002-11-28) | 1-21 | |
| X | * page 11; figure 3 * ----- | 5,15,20 | |
| Y | US 2007/061590 A1 (BOYE DAG E [US] ET AL) 15 March 2007 (2007-03-15) * paragraphs [0016], [0038]; figures 1,2,5 * ----- | 5,15,20 | |
| | | | TECHNICAL FIELDS SEARCHED (IPC) G06F |

The present search report has been drawn up for all claims

| Place of search | Date of completion of the search | Examiner |
|---|---|---|
| Munich | 9 December 2008 | Widera, Sabine |

EPO FORM 1503 03.82 (P04C01)

**ANNEX TO THE EUROPEAN SEARCH REPORT
ON EUROPEAN PATENT APPLICATION NO.**

EP 08 25 2904

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2008

| Patent document cited in search report | | Publication date | Patent family member(s) | | Publication date |
|---|---|---|---|---|---|
| WO 02095657 | A | 28-11-2002 | CA | 2447578 A1 | 28-11-2002 |
| | | | EP | 1402681 A2 | 31-03-2004 |
| | | | JP | 2004537103 T | 09-12-2004 |
| | | | US | 2006235729 A1 | 19-10-2006 |
| | | | US | 2004193893 A1 | 30-09-2004 |
| US 2007061590 | A1 | 15-03-2007 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **N.K.RATHA ; J.H.CONNELL ; R.M.BOLLE.** Enhancing security and privacy in biometrics-based authentication systems. *IBM Systems Journal,* 2001, vol. 40 (3
- **JAMES L. CAMBIER ; ULF M. CAHN VON SEELEN ; RANDAL GLASS ; RUSS ELL MOORE ; IAN SCOTT ; MICHAEL BRAI THWAI TE ; JOHN DAUGMAN.** Application-Specific Biometric Templates. *IEEE Workshop on Automated Identification Advanced Technologies,* March 2002, 167-171

- **NAOTO MIURA ; AKIO NAGASAKA ; TAKAFUMI MIYATAKE.** Feature extraction of finger-vein patterns based on repeated line tracking and it's application to personal identification. *Machine Vision and Applications,* 2004, vol. 15, 194-203
- **SHINJI HIRATA ; KENTA TAKAHASHI ; MASAHIRO MIMURA.** A Proposition of Cancelable Biometrics Applicable to Biometric Authentication based on Image Matching. *2006-CSEC-34,* 2006, 45-440